# EUROPEAN PATENT SPECIFICATION

(11) **EP 2 896 241 B1**
(45) Date of publication and mention of the grant of the patent: **04.09.2019**
(21) Application number: 13792468.4
(22) Date of filing: 12.09.2013
(51) Int. Cl.: H04W 74/08

(54) **METHOD AND SYSTEM FOR CONTROLLING CONGESTION IN WIRELESS TELECOMMUNICATIONS NETWORKS**
VERFAHREN UND SYSTEM ZUR ÜBERLASTREGELUNG IN DRAHTLOSEN TELEKOMMUNIKATIONSNETZEN
PROCÉDÉ ET SYSTÈME DE MAÎTRISE DE L'ENCOMBREMENT DANS LES RÉSEAUX DE TÉLÉCOMMUNICATIONS SANS FIL

(30) Priority: 12.09.2012 IT TO20120787
(43) Date of publication of application: 22.07.2015
(73) Proprietor: FONDAZIONE LINKS - Leading innovation & knowledge For Society, 10138 Torino (IT)
(72) Inventor: SCOPIGNO, Riccardo, I-10138 Torino (TO) (IT); BREVI, Daniele, I-10138 Torino (TO) (IT); VESCO, Andrea, I-10138 Torino (TO) (IT)
(74) Representative: Metroconsult Srl
(86) International application number: PCT/IB2013/058480
(87) International publication number: WO 2014/041495

(56) References cited:
- GB-A- 2 471 287
- US-A1- 2007 083 296
- US-A1- 2011 009 151
- US-A1- 2011 044 172
- CHING-LING HUANG ET AL: "Robustness Evaluation of Decentralized Self-Information Dissemination Control Algorithms for VANET Tracking Applications", VEHICULAR TECHNOLOGY CONFERENCE FALL (VTC 2009-FALL), 2009 IEEE 70TH, IEEE, PISCATAWAY, NJ, USA, 20 September 2009 (2009-09-20), pages 1-5, XP031600158, ISBN: 978-1-4244-2514-3
- "Intelligent Transport Systems (ITS); On the Recommended Parameter Settings for Using STDMA for Cooperative ITS; Access Layer Part", ETSI DRAFT; WG40020V007, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.0.7, 26 October 2011 (2011-10-26), pages 1-46, XP014073484, [retrieved on 2011-10-26]

## Description

The present invention relates to a method and a system for controlling congestion in a wireless telecommunications network, e.g. a vehicular network.

It is known that VANET ("Vehicular Ad-hoc NETwork") vehicular networks are wireless telecommunications networks wherein network nodes are associated with road vehicles. These networks operate in accordance with the IEEE ("Institute of Electrical and Electronics Engineers") 802.11p standard, i.e. an amendment of the IEEE 802.11 standard. The IEEE 802.11p standard re-defines the physical layer of the previous standard to support the implementation of various applications compliant with the ITS ("Intelligent Transportation System") concept.

VANET networks implement a channel access coordination function based on two well-known techniques: CSMA/CA ("Carrier Sense Multiple Access/Collision Avoidance") or TDMA ("Time Division Multiple Access"). The CSMA/CA technique is used by the IEEE 802.11 standard, whereas the TDMA techniques are to date still at proposal level. One example of a TDMA technique is the MS-Aloha ("Mobile Slotted Aloha") protocol.

Several modifications to these two main techniques have been proposed, without however affecting their fundamental principles. In CSMA/CA networks, the decision process for accessing the channel is distributed among the nodes and it is regulated by random channel wait and monitoring times. In TDMA networks, the nodes access the network at specific times, regardless of their assignments.

The main aim of these techniques, also called coordination functions, is to regulate channel access in such a way as to reduce the number of collisions and the resulting re-transmissions that adversely affect the quality of the service being provided.

VANET networks, just like all other networks, are subject to congestion phenomena, which can be aggravated by an increased number of collisions and thus be dependent on the access technique in use. In general, congestion is defined, irrespectively of the access techniques in use, as a network condition in which the traffic offered by the nodes is greater than what the network can handle, resulting in deterioration of the quality of the service being provided, such as, for example, lower throughput and increased delays, delay variations and packet losses. The above definition implies that, whatever the access technique in use, there may be congestion due, for example, to the number of network nodes and the traffic offered to the network.

VANET networks adopt the DCC ("Distributed Congestion Control") algorithm proposed in the ETSI ("European Telecommunications Standards Institute") TS 102687 standard for distributed congestion control in VANET networks. The algorithm aims at preserving network stability, efficient throughput and balanced utilization of the network resources among all network nodes. The DCC algorithm is independent of the channel access protocol in use.

The DCC algorithm defines five traffic transmission control mechanisms:
1) "Transmit Power Control": controls the transmission power of the nodes;
2) "Transmit Rate Control": controls the transmission rate of the nodes, i.e. the time between two successive packets;
3) "Transmit Data Rate Control": controls the physical data transmission rate of the nodes;
4) "DCC Sensitivity Control": controls the power threshold used by the nodes to define whether the transmission channel is available or busy;
5) "Transmit Control Access": controls the access to the communication channel; the mechanism operates according to an on/off logic and either allows or prevents the nodes to gain access to the channel.

All five mechanisms operate on the basis of predefined thresholds that change depending on the channel's occupation status. The DCC algorithm defines three channel statuses; with each one, it associates thresholds for the activation of said control mechanisms, and it defines for each status the maximum and minimum operating values thereof. The statuses are "RELAXED", "ACTIVE" and "RESTRICTIVE"; in particular, the "ACTIVE" status is subdivided into further sub-statuses. Each node, based on its own estimate of the channel status, will operate in one of the three statuses. The "RELAXED" status indicates a low load of the communication channel, the "ACTIVE" status indicates an average load, and the "RESTRICTIVE" status indicates a high load, considering that the low, average and high levels are related to certain thresholds, as will become apparent below.

Therefore, as the channel load increases, the status will change from "RELAXED" to "RESTRICTIVE". Of course, the closer to "RESTRICTIVE" the estimate of the current status of a node, the more the control mechanism will reduce the transmission capacity of that node.

The status change is controlled by a time-based hysteresis mechanism. The channel load estimate must, in fact, exceed a threshold for a given time X for the status to switch from a less restrictive one to a more restrictive one, and vice versa. In this latter case, however, the time Y during which the channel load must stay under the threshold is longer than the time X; this makes the DCC algorithm more conservative.

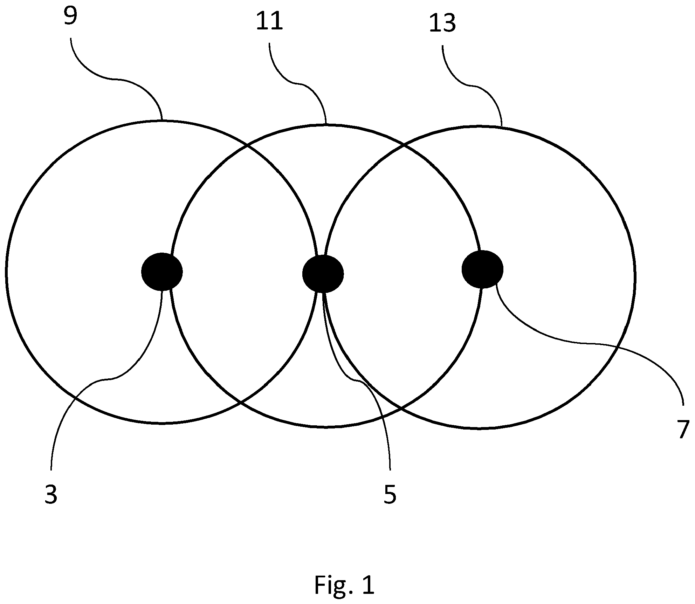

The "hidden terminal" problem is well known issue in wireless telecommunications networks. With reference to Figure 1, there are shown nodes 3, 5 and 7, with which communications regions 9, 11 and 13 are respectively associated. As can be seen in Figure 1, the nodes 3 and 7 can communicate with the node 5, but they cannot communicate with each other because the respective communication regions 9 and 13 do not intersect each other. The nodes 3 and 7 may therefore transmit a packet to the node 5 at the same time, since the node 3 does not detect either the presence or the position of the node 7, and vice versa. It follows that the two transmissions from the nodes 3 and 7 towards the node 5 will collide at the node 5, without the transmitting nodes 3 and 7 being able to know beforehand if either one has already occupied the channel. Only the node 5 can coordinate its own access to the channel with the other two nodes 3 and 7.

This problem reduces the ability of the network to correctly handle the traffic, due to lack of node coordination, when the channel is arbitrated by the CSMA/CA access protocol.

In principle, the DCC algorithm operates correctly when all proximity nodes agree upon the status estimate ("RELAXED", "ACTIVE" or "RESTRICTIVE"). In this case, the DCC algorithm can solve any congestion problem by limiting, in a balanced manner, the transmission of all nodes.

In the DCC algorithm, each node estimates the traffic load on the channel on the basis of information collected independently of the other nodes. Therefore, for all nodes to estimate the same channel load, they must be in positions allowing mutual communications.

As far as network congestion control is concerned, the "hidden terminal" problem is not negligible in urban environments. Furthermore, buildings at the sides of a street are obstacles to propagation of electromagnetic waves, thus adding further attenuation to vehicular transmissions. This phenomenon increases the probability of the presence of a "hidden terminal", especially at crossings.

Also, further transmission attenuation may occur in the presence of agricultural fields and traffic signs.

The document by M. Bonan, T. Vinhoza and J. Barros, "Impact of Vehicles as Obstacles in Vehicular Ad Hoc Networks," IEEE Journal, Vol. 29, No. 1, 2011, also demonstrates that even bulky vehicles such as buses and trucks may introduce further transmission attenuation. "Hidden terminal" situations may arise in this case as well.

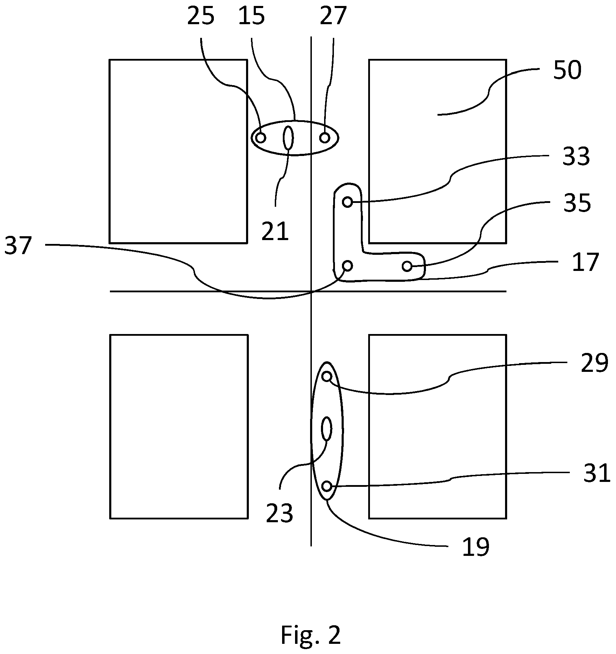

In Figure 2, for example, the collision domains 15, 17 and 19 enclose nodes among which at least one is a "hidden terminal". For example, the nodes 21 and 23 are associated with bulky vehicles susceptible of hindering communication between the nodes 25, 27 and between the nodes 29, 31, respectively. Instead, communication between the nodes 33 and 35 is hindered by the urban structure 50.

The "hidden terminal" problem implies that the estimate of the channel load will not be homogeneous, even between nodes operating within the same collision domain. Hidden nodes tend to estimate a low channel load, while the other nodes will estimate a higher channel load. The different estimates of the same channel load result in the hidden nodes operating in the "RELAXED" or "ACTIVE" status and the non-hidden ones operating in the "RESTRICTIVE" status. This difference increases as the network load becomes higher. The most important consequences consist of unbalanced utilization of network resources and reduction of the traffic handled by the network, leading to increased network congestion.

It is known in the art that TDMA-based protocols can solve the "hidden terminal" problem by means of a smart allocation of the channel access times.

For instance, Japanese patent application no. JP9008815A2 describes the use of external base stations to control the presence of hidden nodes or terminals through the use of radio beacons and time-division channel access, storing the node's instantaneous presence. However, said patent application does not provide a solution for the correct assignment of the operating statuses of the nodes with respect to the channel.

A method for controlling congestion in a wireless telecommunications network according to the preamble of claim 1 is known for example from document US2011/009151 A1 or from "Intelligent Transport Systems (ITS); On the Recommended Parameter Settings for Using STOMA for Cooperative ITS; Access Layer Part". ETSI DRAFT; WG40020V007, EUROPEAN TELECOMMUNICATIONS STANDARDS INSTITUTE (ETSI), 650, ROUTE DES LUCIOLES; F-06921 SOPHIA-ANTIPOLIS; FRANCE, no. V0.0.7, 26 October 2011, pages1-46, XP014073484.

It is therefore one object of the present invention to provide a method and a system for controlling congestion in a wireless telecommunications network, so as to reduce network traffic congestion even in the presence of hidden nodes.

It is another object of the present invention to provide a method and a system for controlling congestion in a wireless telecommunications network which can ensure network stability even in the presence of hidden nodes.

It is a further object of the present invention to provide a method and a system for controlling congestion in a wireless telecommunications network which can ensure an efficient throughput even in the presence of hidden nodes.

It is a further object of the present invention to provide a method and a system for controlling congestion in a wireless telecommunications network which allow for a balanced utilization of the resources among all network nodes even in the presence of hidden nodes.

It is a further object of the present invention to provide a method and a system for controlling congestion in a wireless telecommunications network which allow for a correct assignment of the operating statuses of the nodes with respect to the channel, even in the presence of hidden nodes.

It is yet another object of the present invention to provide a method and a system for controlling congestion in a wireless telecommunications network which can detect the presence and position of any hidden nodes.

These and other objects of the invention are achieved through a method and a system for controlling congestion in a wireless telecommunications network as claimed in the appended claims, which are intended to be an integral part of the present description.

The above objects aim at improving the estimate of the node's operating status, resulting in more traffic being handled by the network, a more stable network, efficient throughput, balanced utilization of network resources among the nodes, and reduced network congestion.

Further features of the invention are set out in the appended claims, which are intended to be an integral part of the present description.

The above objects will become more apparent from the following detailed description of a method and a system for controlling congestion of wireless telecommunication networks according to the present invention, with particular reference to the annexed drawings, wherein:
- Figure 1 is a diagram that illustrates the "hidden terminal" problem;
- Figure 2 shows three possible configuration scenarios of nodes in an urban environment, wherein at least one of said nodes is a "hidden terminal".

With reference to Figure 2, in a first scenario the nodes 33 and 35 cannot communicate with each other, although they are within the same collision domain 17, because the urban structure 50 hinders communication. The node 33 only detects the presence of a node 37, and the node 35 only detects the presence of the node 37; as a consequence, the nodes 33 and 35 underestimate the channel load, remaining in a "RELAXED" or "ACTIVE" operating status. The nodes 33 and 35 may thus transmit data packets to the node 37 at the same time, resulting in a collision because neither node 33 or 35 has detected the other node's transmission.

From this first scenario, it emerges that the nodes' operating statuses are not estimated correctly. In fact, if the nodes 33 and 35 were in direct mutual communication, then the operating statuses of the nodes 33 and 35 might be "RESTRICTIVE". In this scenario, it is therefore advantageous, in order to determine the correct operating status of a node, to adopt a network traffic congestion control algorithm making use of position information indicating the geographic position and presence of network nodes and fixed structures, in particular urban structures and infrastructures, such as buildings, agricultural fields, traffic signs, and the like.

For example, the node 33 can detect the presence and position of the node 35 thanks to a position information regarding the nodes' geographic position. Furthermore, position information may advantageously be used in order to detect the urban structure 50. This allows the node 33 to know that there are three nodes, not two, within the collision domain 17, so that the node 33 may take the "RESTRICTIVE" status and the control mechanism will reduce the nodes' transmission capacity accordingly. The same applies to the node 35.

By way of non-limiting example, such position information may be obtained by means of cartographic data transmitted by cartographic computers, even installed aboard the vehicle, which communicate with the node via on-board cameras, via data exchange between nodes, or via an external telecommunications network, particularly an ITS network.

It is important to point out that said vehicle is associated with the node itself in VANET networks.

In a second scenario, the nodes 25 and 27, within the collision domain 15, cannot communicate with each other because the node 21 hinders communication. In this example, the node 21 is associated with a bulky vehicle that hinders communication between nodes. Therefore, the node 25 only detects the presence of one node 21, and the node 27 only detects the presence of the node 21; as a consequence, the nodes 25 and 27 underestimate the channel load, remaining in a "RELAXED" or "ACTIVE" operating status. The nodes 25 and 27 may thus transmit data packets to the node 21 at the same time, resulting in a collision because neither node 25 or 27 has detected the other node's transmission.

From this second scenario as well, it emerges that the nodes' operating statuses are not estimated correctly. In fact, if the nodes 25 and 27 were in direct mutual communication, then the operating statuses of the nodes 25 and 27 might be "RESTRICTIVE". Also in this second scenario, it becomes useful, in order to determine the correct operating status of a node, to adopt a network traffic congestion control algorithm making use of position information indicating the geographic position and the presence of network nodes, and a size information indicating the physical dimension of mobile means, in particular of bulky vehicles.

For example, the node 25 can detect the presence and position of the node 27 thanks to position information indicating the geographic position of that node and of the node 21. Moreover, it is advantageous to use size information in order to establish the size, i.e. the outer dimensions, of the node 21 that hinders communication. This allows the node 25 to establish that there are three nodes, not two, in the collision domain 15, and that there is a bulky node 21 susceptible of hindering communication with the node 27; therefore, the node 25 will take the "RESTRICTIVE" status, and the control mechanism will reduce the nodes' transmission capacity accordingly. The same applies to the node 27.

Furthermore, by way of example, the node 25 may come to know the presence and position of the node 27 thanks to position information indicating the geographic position of that node and to network status information received from an external telecommunications network, such as, for example, an ITS network. As an alternative, the ITS network may know the position of the nodes and thus determine their operating status.

In one embodiment of the invention, the position and size information is obtained from an external telecommunications network, in particular the ITS network.

In another embodiment, the size information can be useful to establish the outer dimensions of fixed structures susceptible of hindering communication between the nodes, which would result in wrong estimates of the nodes' operating statuses.

The size information indicates the physical size, i.e. the outer dimensions, of fixed structures such as, for example, buildings, and/or of mobile means, such as, for example, vehicles; said size information may be obtained by means of video cameras installed aboard the vehicle.

It is also important to specify that, in order to attain correct estimates of the nodes' operating statuses, determining the presence of the nodes and/or the presence of infrastructures and mobile means susceptible of hindering communication between nodes is more important than the total number of nodes within the same collision domain.

In addition, it is important to specify that the method according to the present invention is also applicable to other congestion control algorithms based on estimates of the network nodes' operating statuses.

The method according to the invention can be implemented by means of a computer product which can be loaded into a memory of a node and which comprises software code portions adapted to implement said method.

The features of the present invention, as well as the advantages thereof, are apparent from the above description.

A first advantage of the present method and system for controlling congestion in a wireless telecommunications network is that network traffic congestion is reduced.

A second advantage of the method and system according to the present invention is that the network remains stable over time.

A third advantage of the method and system according to the present invention is that an efficient throughput is obtained.

A fourth advantage of the method and system according to the present invention is that they allow for balanced utilization of network resources among all nodes.

A fifth advantage of the method and system according to the present invention is that they ensure correct assignments of the nodes' operating statuses with respect to the channel.

A further advantage of the method and system according to the present invention is that the presence and position of any hidden nodes can be detected.

The method and the system for controlling congestion in wireless telecommunications networks may be subject to many possible variations without departing from the scope of the appended claims; it is also clear that in the practical implementation of the invention the illustrated details may have different shapes or be replaced with other technically equivalent elements.

For example, the method and system for controlling congestion in a wireless telecommunications network can be adopted in MANET (Mobile Ad-hoc Network) networks for military and civil applications.

## Claims

1. A method for controlling congestion in a wireless telecommunications network having a plurality of nodes (3,5,7,21,23,25,27,29,31,33,35,37), said plurality of nodes (3,5,7,21,23,25,27,29,31,33,35,37) being in an operating status, and said operating status being dependent on said congestion of said network, said method comprising the step of executing, on at least one node (25,27,29,31,33,35) of said network, an algorithm for controlling traffic congestion in said network,
said method comprising: using by the at least one node (25,27,29,31,33,35), in order to determine its own operating status, position information comprising information about the geographic position and the presence of one or more nodes (21,23,25,27,29,31,33,35,37) of said network, and information about the physical size, indicating the outer dimensions, of fixed structures (50) and/or of vehicles associated with nodes (21,23,25,27,29,31,33,35,37) hindering communication with said at least one node; and operating said at least one node according to the determined operating status.

2. The method according to claim 1, wherein said position information further comprises position information about the geographic position and the presence of the fixed structures (50).

3. The method according to claim 1 or 2, wherein said position information further comprises position information about the geographic position and the presence of the vehicles associated with nodes (21,23,25,27,29,31,33,35,37).

4. The method according to one or more of the preceding claims, wherein said position information is obtained through cartographic data.

5. The method according to one or more of the preceding claims, wherein said position information and said size information are obtained from an external telecommunications network, in particular from the Intelligent Transportation System network.

6. The method according to claim 5, wherein said external telecommunications network determines the operating status of the nodes (21,23,25,27,29,31,33,35,37).

7. The method according to one or more of the preceding claims, wherein said position information is obtained through data exchange between nodes (21,23,25,27,29,31,33,35,37).

8. The method according to claim 6, wherein said operating status of said at least one node (25,27,29,31,33,35) is determined based on status information of said telecommunications network.

9. The method according to one or more of the preceding claims, wherein said size information relates to the physical dimensions of said fixed structures (50) and/or of said vehicles associated with nodes (21,23,25,27,29,31,33,35,37) and said position information and said size information are obtained through on-board video cameras of the vehicles.

10. The method according to one or more of the preceding claims, wherein said fixed structures (50) are urban structures and infrastructures, in particular buildings, agricultural fields and traffic signs.

11. The method according to one or more of the preceding claims, wherein the vehicles comprise respective nodes (21,23,25,27,29,31,33,35,37) of said network.

12. The method according to claim 1, wherein said traffic congestion control algorithm is the Decentralized Congestion Control, DCC, algorithm and said telecommunications network is a Vehicular Ad-hoc NETwork, VANET, or a Mobile Ad-hoc NETwork, MANET, network.

13. A system for controlling congestion in wireless telecommunications networks, said system comprising a plurality of nodes (3,5,7,21,23,25,27,29,31,33,35,37), said nodes (3,5,7,21,23,25,27,29,31,33,35,37) being adapted to implement the method according to one or more of the preceding claims.

14. The system according to claim 13, wherein said nodes (21,23,25,27,29,31,33,35,37) are associated with mobile means (21,23,25,27,29,31,33,35,37), in particular vehicles.

15. A computer software product comprising a computer-readable medium wherein instruction that can be loaded into a memory of a node (3,5,7,21,23,25,27,29,31,33,35,37) are stored, which instructions, when run on a computer associated with the node, cause the computer to perform the method according to one or more of claims 1 to 12.

## Patentansprüche

1. Verfahren zum Steuern von Staus in einem drahtlosen Telekommunikationsnetzwerk mit einer Vielzahl von Knoten (3, 5, 7, 21, 23, 25, 27, 29, 31, 33, 35, 37), wobei sich die Vielzahl von Knoten (3, 5, 7, 21 ,23, 25, 27, 29, 31, 33, 35, 37) in einem Betriebszustand befindet, und wobei der Betriebszustand von der Überlastung des Netzwerks abhängt, wobei das Verfahren den Schritt umfasst, auf mindestens einem Knoten (25, 27, 29, 31, 33, 35) des Netzwerks einen Algorithmus zum Steuern von Verkehrsüberlastungen in dem Netzwerk auszuführen,
wobei das Verfahren umfasst: Verwenden von Positionsinformationen, die Informationen über die geographische Position und das Vorhandensein eines oder mehrerer Knoten (21, 23, 25, 27, 29, 29, 31, 33, 35, 37) des Netzwerks umfassen, und Informationen über die physikalische Größe, die die äußeren Abmessungen von festen Strukturen (50) und/oder Fahrzeugen angeben, die Knoten (21, 23, 25, 27, 29, 31, 33, 33, 35, 35, 37) zugeordnet sind, die die Kommunikation mit dem mindestens einen Knoten behindern, um seinen eigenen Betriebszustand zu bestimmen; und Betreiben des mindestens einen Knotens gemäß dem bestimmten Betriebszustand..

2. Verfahren nach Anspruch 1, wobei die Positionsinformationen ferner Positionsinformationen über die geographische Position und das Vorhandensein von festen Strukturen (50) umfassen.

3. Verfahren nach Anspruch 1 oder 2, wobei die Positionsinformationen ferner Positionsinformationen über die geographische Position und das Vorhandensein der den Knoten (21, 23, 25, 27, 29, 29, 31, 33, 35, 37) zugeordneten Fahrzeuge umfassen.

4. Verfahren nach einem oder mehreren der vorhergehenden Ansprüche, wobei die Positionsinformationen durch kartographische Daten erhalten werden.

5. Verfahren nach einem oder mehreren der vorhergehenden Ansprüche, wobei die Positionsinformationen und die Größeninformationen aus einem externen Telekommunikationsnetz, insbesondere aus dem Netz des intelligenten Transportsystems, bezogen werden.

6. Verfahren nach Anspruch 5, wobei das externe Telekommunikationsnetzwerk den Betriebszustand der Knoten (21, 23, 25, 27, 29, 31, 33, 35, 37) bestimmt.

7. Verfahren nach einem oder mehreren der vorhergehenden Ansprüche, wobei die Positionsinformationen durch Datenaustausch zwischen Knoten (21, 23, 25, 25, 27, 29, 31, 33, 35, 37) erhalten werden.

8. Verfahren nach Anspruch 6, wobei der Betriebszustand des mindestens einen Knotens (25, 27, 29, 31, 33, 35) basierend auf Statusinformationen des Telekommunikationsnetzes bestimmt wird.

9. Verfahren nach einem oder mehreren der vorhergehenden Ansprüche, wobei sich die Größeninformationen auf die physikalischen Abmessungen der festen Strukturen (50) und/oder der mit Knoten (21, 23, 25, 27, 29, 31, 33, 35, 37) verbundenen Fahrzeuge beziehen und die Positionsinformationen und die Größeninformationen durch On-Board-Videokameras der Fahrzeuge erhalten werden.

10. Verfahren nach einem oder mehreren der vorhergehenden Ansprüche, wobei die festen Strukturen (50) städtische Strukturen und Infrastrukturen sind, insbesondere Gebäude, landwirtschaftliche Felder und Verkehrszeichen.

11. Verfahren nach einem oder mehreren der vorhergehenden Ansprüche, worin die Fahrzeuge entsprechende Knoten (21, 23, 25, 27, 29, 29, 31, 33, 35, 37) des Netzwerks umfassen.

12. Verfahren nach Anspruch 1, wobei der Algorithmus zur Steuerung der Verkehrsstauung der dezentrale Überlastungssteuerung, DCC, Algorithmus ist und das Telekommunikationsnetzwerk ein Fahrzeug-Ad-hoc-Netzwerk, VANET, oder ein mobiles Ad-hoc-Netzwerk, MANET, Netzwerk ist.

13. System zum Steuern von Staus in drahtlosen Telekommunikationsnetzen, wobei das System eine Vielzahl von Knoten (3, 5, 7, 21, 23, 25, 27, 29, 31, 33, 35, 37) umfasst, wobei die Knoten (3, 5, 7, 21, 23, 25, 27, 29, 31, 33, 35, 37) angepasst sind, um das Verfahren gemäß einem oder mehreren der vorhergehenden Ansprüche durchzuführen.

14. System nach Anspruch 13, wobei die Knoten (21, 23, 25, 27, 29, 29, 31, 33, 35, 37) mobilen Mitteln (21, 23, 25, 27, 29, 31, 33, 35, 37), insbesondere Fahrzeugen, zugeordnet sind.

15. Computersoftwareprodukt, umfassend ein computerlesbares Medium, worin Anweisungen, die in einen Speicher eines Knotens (3, 5, 7 , 21, 23, 25, 27, 29, 31, 31, 33, 35, 37) geladen werden können, gespeichert sind, welche Anweisungen, wenn sie auf einem dem Knoten zugeordneten Computer ausgeführt werden, den Computer veranlassen, das Verfahren nach einem oder mehreren der Ansprüche 1 bis 12 durchzuführen.

## Revendications

1. Procédé pour commander une congestion dans un réseau de télécommunication sans fil ayant une pluralité de noeuds (3, 5, 7, 21, 23, 25, 27, 29, 31, 33, 35, 37), ladite pluralité de noeuds (3, 5, 7, 21, 23, 25, 27, 29, 31, 33, 35, 37) étant dans un état de fonctionnement, et ledit état de fonctionnement étant dépendant de ladite congestion dudit réseau, ledit procédé comprenant l'étape consistant à exécuter, sur au moins un noeud (25, 27, 29, 31, 33, 35) dudit réseau, un algorithme pour commander une congestion de trafic dans ledit réseau,
ledit procédé comprenant : utiliser, par l'au moins un noeud (25, 27, 29, 31, 33, 35), afin de déterminer son propre état de fonctionnement, des informations de position comprenant des informations à propos de la position géographique et de la présence d'un ou plusieurs noeuds (21, 23, 25, 27, 29, 31, 33, 35, 37) dudit réseau, et des informations à propos de la taille physique, indiquant les dimensions extérieures, de structures fixes (50) et/ou de véhicules associés à des noeuds (21, 23, 25, 27, 29, 31, 33, 35, 37) gênant une communication avec ledit au moins un noeud ; et commander ledit au moins un noeud selon l'état de fonctionnement déterminé.

2. Procédé selon la revendication 1, dans lequel lesdites informations de position comprennent en outre des informations de position à propos de la position géographique et de la présence des structures fixes (50).

3. Procédé selon la revendication 1 ou 2, dans lequel lesdites informations de position comprennent en outre des informations de position à propos de la position géographique et de la présence des véhicules associés à des noeuds (21, 23, 25, 27, 29, 31, 33, 35, 37).

4. Procédé selon une ou plusieurs des revendications précédentes, dans lequel lesdites informations de position sont obtenues par l'intermédiaire de données cartographiques.

5. Procédé selon une ou plusieurs des revendications précédentes, dans lequel lesdites informations de position et lesdites informations de taille sont obtenues à partir d'un réseau de télécommunication externe, en particulier à partir du réseau de système de transport intelligent.

6. Procédé selon la revendication 5, dans lequel ledit réseau de télécommunication externe détermine l'état de fonctionnement des noeuds (21, 23, 25, 27, 29, 31, 33, 35, 37).

7. Procédé selon une ou plusieurs des revendications précédentes, dans lequel lesdites informations de position sont obtenues par l'intermédiaire d'un échange de données entre des noeuds (21, 23, 25, 27, 29, 31, 33, 35, 37).

8. Procédé selon la revendication 6, dans lequel ledit état de fonctionnement dudit au moins un noeud (25, 27, 29, 31, 33, 35) est déterminé sur la base d'informations d'état dudit réseau de télécommunication.

9. Procédé selon une ou plusieurs des revendications précédentes, dans lequel lesdites informations de taille concernent les dimensions physiques desdites structures fixes (50) et/ou desdits véhicules associés à des noeuds (21, 23, 25, 27, 29, 31, 33, 35, 37) et lesdites informations de position et lesdites informations de taille sont obtenues par l'intermédiaire de caméras vidéo embarquées des véhicules.

10. Procédé selon une ou plusieurs des revendications précédentes, dans lequel lesdites structures fixes (50) sont des structures et des infrastructures urbaines, en particulier des bâtiments, des champs agricoles et des panneaux de signalisation.

11. Procédé selon une ou plusieurs des revendications précédentes, dans lequel les véhicules comprennent des noeuds respectifs (21, 23, 25, 27, 29, 31, 33, 35, 37) dudit réseau.

12. Procédé selon la revendication 1, dans lequel ledit algorithme de commande de congestion de trafic est l'algorithme de commande de congestion décentralisée, DCC, et ledit réseau de télécommunication est un réseau Ad-hoc pour les véhicules, VANET, ou de réseau Ad-hoc mobile, MANET.

13. Système pour commander une congestion dans des réseaux de télécommunication sans fil, ledit système comprenant une pluralité de noeuds (3, 5, 7, 21, 23, 25, 27, 29, 31, 33, 35, 37), lesdits noeuds (3, 5, 7, 21, 23, 25, 27, 29, 31, 33, 35, 37) étant conçus pour mettre en oeuvre le procédé selon une ou plusieurs des revendications précédentes.

14. Système selon la revendication 13, dans lequel lesdits noeuds (21, 23, 25, 27, 29, 31, 33, 35, 37) sont associés à des moyens mobiles (21, 23, 25, 27, 29, 31, 33, 35, 37), en particulier des véhicules.

15. Produit logiciel d'ordinateur comprenant un support lisible par ordinateur dans lequel des instructions qui peuvent être chargées dans une mémoire d'un noeud (3, 5, 7, 21, 23, 25, 27, 29, 31, 33, 35, 37) sont stockées, lesquelles instructions, lorsqu'elles s'exécutent sur un ordinateur associé au noeud, amènent l'ordinateur à réaliser le procédé selon une ou plusieurs des revendications 1 à 12.
